# EUROPEAN PATENT APPLICATION

(11) **EP 3 886 493 A1**
(43) Date of publication of application: **29.09.2021**
(21) Application number: 19886839.0
(22) Date of filing: 21.11.2019
(51) Int. Cl.: H04W 28/16, H04L 12/24

(54) **METHOD AND DEVICE FOR REALIZING NETWORK SLICING, AND CONTROLLER**

(30) Priority: 23.11.2018 CN 201811409431
(71) Applicant: ZTE Corporation, Shenzhen, Guangdong 518057 (CN)
(72) Inventor: LIAO, Guoqing, Shenzhen, Guangdong 518057 (CN); CHEN, Jie, Shenzhen, Guangdong 518057 (CN); ZHAN, Shuangping, Shenzhen, Guangdong 518057 (CN)
(74) Representative: Canzler & Bergmeier Patentanwälte Partnerschaft mbB
(86) International application number: PCT/CN2019/119933
(87) International publication number: WO 2020/103902

(57) **Abstract**

Provided are a method and device for realizing network slicing, and a controller. The method comprises: creating one or more embedded network slicing layers between a physical network layer and a service layer, wherein each network slice in the network slicing layer is created by means of a process comprising: creating multiple virtual network elements; employing a tunneling technique to create virtual links between the virtual network elements; and establishing an inclusive relationship among the network slices, the virtual network elements and the virtual links.

## Description

### TECHNICAL FIELD

The present disclosure relates to, but is not limited to, the field of communications.

### BACKGROUND

With the development of communication technology, services of operators are characterized in multi-scenario and differentiation, and it is necessary to construct independent end-to-end logic networks for different types of services on the same physical network by means of slicing. The essence of network virtualization is resource sharing, that is, physical networks are subjected to resource pooling, so that resources can be partitioned or consolidated to construct virtual networks which meet requirements of upper-layer services. Bearer network slicing refers to creating a plurality of virtual networks (vNets), also called network slices, on a shared physical network resource using the virtualization technology, with each vNet independently deployed and managed.

The bearer network slicing can slice a physical network into corresponding virtual networks according to different types of bearer services or different tenants (for example, slicing is performed according to government-enterprise customers and family customers, and Enhanced Mobile Broadband (eMBB) services, Ultra Reliable & Low Latency Communication (uRLLC) services and Massive Machine Type Communication (mMTC) services of 5th generation (5G)), so as to meet requirements of different types of services. Compared with the construction of different physical network planes, network slicing can realize the sharing of physical network resources, avoid repeated construction, and greatly reduce cost of network construction. Moreover, resource scheduling is more flexible, which is convenient for management, operation and maintenance and service deployment.

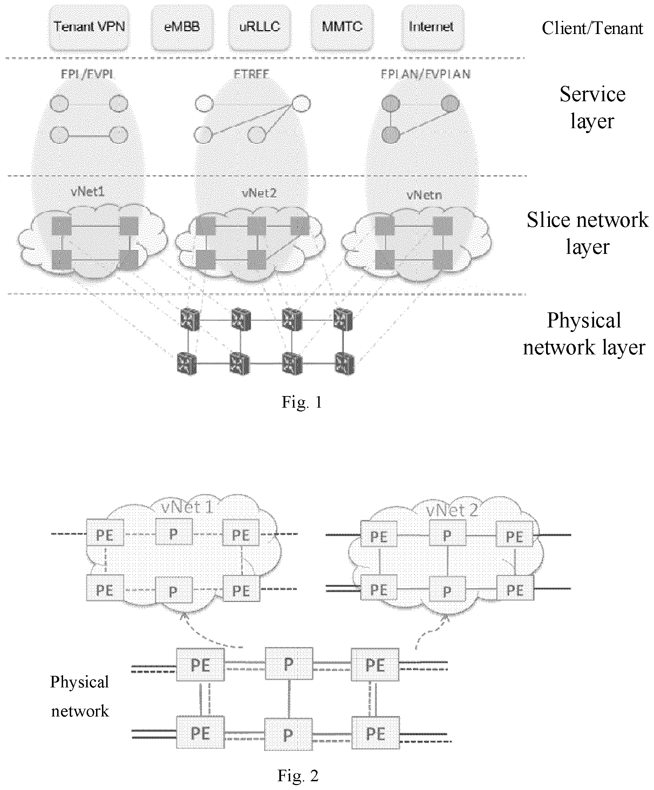

The network architecture of a conventional bearer network is hieratically divided into a physical network layer, a service layer and a client-layer, the service layer is right above the physical network layer, that is, services are directly loaded onto the physical network. Based on network slicing models and methods, a virtual network layer formed by slicing is added between the service layer and the physical network layer. Fig. 1 shows the network architecture based on network slicing.

The virtual network layer (slice layer) is located between the service layer and the physical network layer, and thus enables the decoupling of the service layer and the physical network layer. The service layer does not need to perceive the physical network, and the virtual network perceived by the service layer is similar to the physical network. The slices are created before the creation of services, and then the services are loaded onto the slices; and the slices can be flexibly created and adjusted. Based on the vNets, various services can be further created, such as Layer 2 Virtual Private Networks (L2VPN), Layer 3 Virtual Private Networks (L3VPN) and the like. Each slice can meet the requirements of its services, and can be monitored and managed independently, which realizes resource isolation between slices.

Similar to a physical network including nodes and links, a network slice vNet includes virtual nodes (vNodes) and virtual links (vLinks). Fig. 2 illustrates a method for implementing network slicing based on physical ports. As shown in Fig. 2, the ports indicated by solid lines and the ports indicated by dashed line respectively represent two different network slices created through resource virtualization.

However, the slicing based on the physical ports has the following disadvantages:
1. Multiple groups of physical ports are need and different slices are isolated by the physical ports, which leads relatively high requirements for the port resources; and
2. Network abstraction cannot be realized completely. For example, although a user of a vNet1 only needs to perceive four Provider Edge (PE) nodes and does not need to perceive intermediate P nodes, only the whole topology can be presented to the user of the slice because the slicing based on ports has no network abstraction capability.

### SUMMARY

An embodiment of the present disclosure provides a method for implementing network slicing, including creating one network slice layer or a plurality of nested network slice layers between a physical network layer and a service layer, and each network slice in the network slice layer is created through the following steps: creating a plurality of virtual network elements; creating a virtual link between the virtual network elements by means of tunnels; and establishing an inclusive relationship between a network slice and the virtual network elements and the virtual link.

An embodiment of the present disclosure further provides a device for implementing network slicing, including a network element creating module configured to create a plurality of virtual network elements; a link creating module configured to create a virtual link between the virtual network elements by means of tunnels; and a slice creating module configured to establish an inclusive relationship between a network slice and the virtual network elements and the virtual link.

An embodiment of the present disclosure further provides a controller, including a memory, a processor and a computer program which is stored on the memory and can run on the processor. When the processor executes the program, the method for implementing network slicing is performed.

An embodiment of the present disclosure further provides a computer-readable storage medium having computer-executable instructions stored thereon. The computer-executable instructions are configured to perform the method for implementing network slicing when being executed by a processor.

### BRIEF DESCRIPTION OF THE DRAWINGS

The accompanying drawings are intended to provide a further understanding of the technical solutions of the present disclosure, and constitute a part of the description. The drawings together with the embodiments of the present disclosure are intended to explain the technical solutions of the present disclosure, but do not constitute a limitation on the technical solutions of the present disclosure.
Fig. 1 is a schematic diagram of a network architecture model based on network slicing;
Fig. 2 is a schematic diagram of a network slicing model based on physical ports;
Fig. 3 is a flowchart illustrating a method for implementing network slicing according to an implementation of the present disclosure;
Fig. 4 is a schematic diagram of a model of creation of a network slice by means of tunnels according to an implementation of the present disclosure;
Fig. 5 is a schematic diagram illustrating creation of a network slice by a tunnel mechanism according to an implementation of the present disclosure;
Fig. 6 is a schematic diagram of label assignment and service encapsulation of LSP tunnels when a slice vNet2 is formed according to an implementation of the present disclosure;
Fig. 7 is a schematic diagram of a network architecture model based on nested network slices according to an implementation of the present disclosure;
Fig. 8 is a schematic diagram illustrating an implementation of nested network slicing based on tunnels according to an implementation of the present disclosure;
Fig. 9 is a schematic diagram of LSP label assignment and service encapsulation when vNet2.1 is formed through nested network slicing based on double-layer LSP tunnels according to an implementation of the present disclosure;
Fig. 10 is a schematic diagram of nested label assignment and service encapsulation of LSP tunnels when vNet2.2 is formed according to an implementation of the present disclosure;
Fig. 11 is a schematic diagram of service frame encapsulation of a nested slice vNet2.1 based on an LSP tunnel and an SR tunnel according to an implementation of the present disclosure;
Fig. 12 is a schematic diagram of end-to-end service forwarding of a FlexE tunnel;
Fig. 13 is a schematic diagram of single-node FlexE forwarding;
Fig. 14 is a schematic diagram of service frame encapsulation of a nested slice vNet2.1 based on a FlexE tunnel and an LSP tunnel according to an implementation of the present disclosure;
Fig. 15 is a schematic diagram of end-to-end service forwarding of an ODUk tunnel;
Fig. 16 is a schematic diagram of single-node mapping cross of ODUk;
Fig. 17 is a schematic diagram of service frame encapsulation of a nested network slice vNet2.1 based on an ODUk tunnel and an LSP tunnel according to an implementation of the present disclosure;
Fig. 18 is a schematic diagram of an application scenario of nested network slicing according to an implementation of the present disclosure;
Fig. 19 is a schematic diagram of an instance of creation of a nested network slice according to an application example of the present disclosure;
Fig. 20 is a schematic diagram of a device for implementing network slicing according to an implementation of the present disclosure; and
Fig. 21 is a schematic diagram of a controller according to an implementation of the present disclosure.

### DETAILED DESCRIPTION

The embodiments of the present disclosure will be described in detail below with reference to the accompanying drawings. It should be noted that the embodiments and the features in the embodiments of the present disclosure can be arbitrarily combined with each other in the case of no conflict.

The steps illustrated in the flowcharts of the drawings may be performed in a computer system such as a set of computer-executable instructions. In addition, although a logical order is illustrated in the flowchart, the steps illustrated or described may be performed in an order different from that described herein in some cases.

An embodiment of the present disclosure provides a method for implementing network slicing and nested slicing based on the tunneling technology, and the method can be applied to a bearer network based on the technologies such as a Packet Transport Network (PTN) and a router. Virtual links connecting virtual network elements are created through tunnels, then the virtual nodes and the virtual links are uniformly managed to form a network slice or nested slices, on which upper-layer systems can create their respective services.

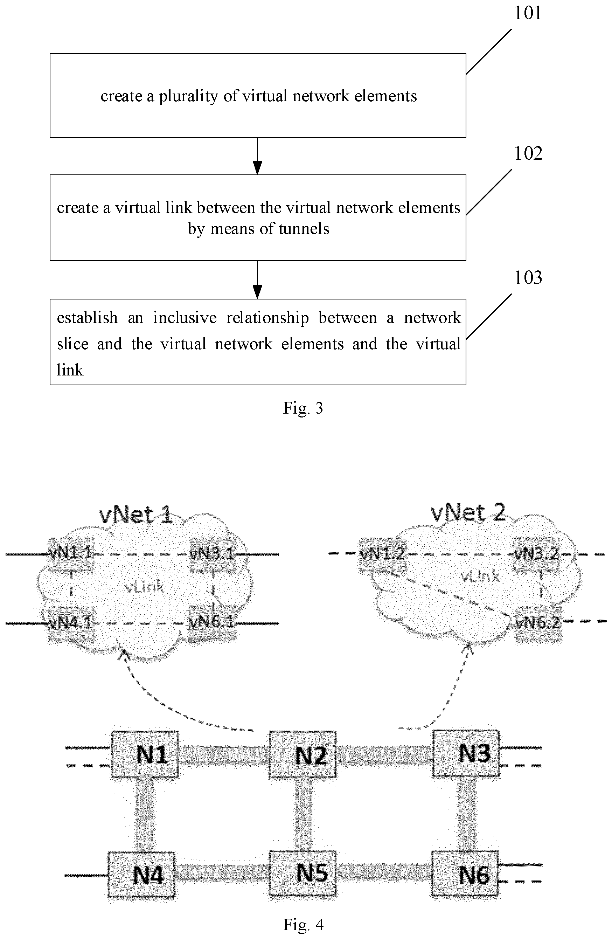

As shown in Fig. 3, a method for implementing network slicing according to an implementation of the present disclosure includes creating one network slice layer or a plurality of nested network slice layers between a physical network layer and a service layer, and each network slice in the network slice layer can be created through the following steps 101 to 103.

In the step 101, a plurality of virtual network elements are created.

The virtual network element can also be referred to as a virtual node.

In an embodiment, the virtual network elements and virtual ports thereof are created according to characteristic parameters of the virtual network elements and the virtual ports.

The virtual ports of the virtual network elements include a virtual user-network interface and a virtual network-to-network interface.

The virtual network-to-network interface is an endpoint of a virtual link, and is also an endpoint of a tunnel.

In the step 102, a virtual link is created between the virtual network elements by means of tunnels.

In an embodiment, a tunnel is created as the virtual link according to port parameters of the virtual link.

In an embodiment, the routing of the virtual link is calculated according to the port parameters of the virtual link and a network topological relationship, and a tunnel is created as the virtual link.

The tunnel may include at least one of a Label Switched Path (LSP) tunnel, a Flex Ethernet (FlexE) tunnel, a Segment Routing (SR) tunnel and an Optical Channel Data Unit (ODUk) tunnel.

For example, an LSP tunnel is created as the virtual link by assigning an incoming label and/or an outgoing label to each virtual network element on the virtual link.

A slice adopting the LSP tunnel or SR tunnel has the advantages of low requirements for hardware resources, good bandwidth multiplexing effect and flexible deployment, and a slice adopting the FlexE tunnel or ODUk tunnel has the advantages of low latency and good transparency and isolation.

In an embodiment, when two nested network slice layers are created between the physical network layer and the service layer, the first network slice layer is implemented based on at least one of the LSP tunnel, the FlexE tunnel or the ODUk tunnel, and the second network slice layer is implemented based on the LSP tunnel or the SR tunnel.

In the step 103, an inclusive relationship between a network slice and the virtual network elements and the virtual link is established.

The creation of the network slice is completed based on a set of the created virtual network elements and virtual link.

In an embodiment, when a plurality of nested network slice layers are created between the physical network layer and the service layer, the network slice layers are sequentially created from bottom to top.

An upper network slice layer is created based on a network topology of a lower network slice layer.

The embodiments of the present disclosure may be implemented by a controller, such as a Software Defined Network (SDN) controller. The SDN is a new open network architecture, and achieves flexible distribution and scheduling of network resources by separating a control plane from a forwarding plane of a network and performing unified and centralized control. Network virtualization based on the SDN technology provides a great technical platform for implementing bearer network slicing.

According to the embodiments of the present disclosure, the virtual links are created based on the tunneling technology, the actual physical network is abstracted by the virtual links, and forwarding information of intermediate nodes are shielded, thereby achieving isolation and mapping of physical resources and logical resources. With no need to perceive states of the actual physical network, a user of the slice only needs to perceive the constructed slice network.

According to the embodiments of the present disclosure, network slicing is implemented based on the tunneling technology, which can endow the network slice architecture with a topology abstraction capability, has no high requirements for physical port resources, and can be widely applied to bearer networks based on the technologies such as a PTN and a router, and future 5G bearer networks.

As shown in Fig. 4 which is a model of creation of a network slice by means of tunnels, two slice networks vNet1 (including virtual nodes vN1.1, vN3.1, vN4.1 and vN6.1) and vNet2 (including virtual nodes vN1.2, vN3.2 and vN6.2) are virtualized based on a physical network (including physical network elements N1, N2, N3, N4, N5 and N6). The actual physical network is abstracted by end-to-end tunnels and forwarding information of intermediate nodes is shielded, thereby achieving isolation and mapping of physical resources and logical resources. A user of the slices does not need to perceive states of the physical network, and can directly create services on the slice networks.

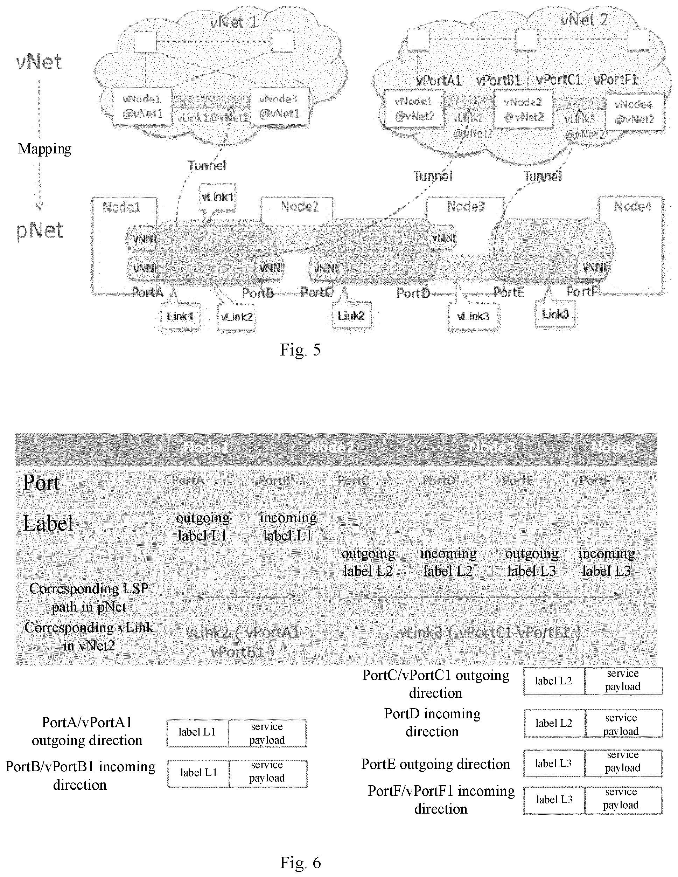

As shown in Fig. 5 which is a schematic diagram illustrating creation of a network slice by a tunnel mechanism. Node1, Node2, Node3 and Node4 are some network elements in a physical network (pNET), PortA, PortB, PortC, PortD, PortE and PortF are physical ports, and Link1, Link2 and Link3 are physical links. Taking the creation of vNet2 as an example, the method includes the following steps 201 to 203.

In the step 201, virtual network elements (vNodes) are created. Virtual network elements vNode1@vNet2, vNode2@vNet2 and vNode4@vNet2 and virtual ports (vPorts (vNNIs)) vPortA1, vPortB1, vPortC1 and vPortF1 are created according to characteristic parameters of the virtual network elements and the virtual ports provided by a user. The vPorts (vNNIs) are endpoints of a virtual link vLink, and are also endpoints of a tunnel.

In the step 202, virtual links (vLinks) are created. The vLinks are created according to the characteristics of the ports of the virtual links provided by the user. A tunnel is created between Node2 and Node4 to serve as a virtual link vLink3 between vNode2 and vNode4, and normal tunneling is performed at the intermediate node Node3, and vNet2 does not need to perceive Node3. In addition, a tunnel is created between Node1 and Node2 to serve as a virtual link vLink2 between vNode1 and vNode2.

In the step 203, a virtual network is created. The creation of vNet2 is completed based on a set of the virtual network elements and the virtual links created in the previous steps.

By assigning an incoming label and/or an outgoing label to each node (network element) in the network, the labels of those nodes form a path, that is, an LSP tunnel. Fig. 6 shows LSP label assignment and service encapsulation of vNet2 formed through network slicing based on the LSP tunnel. vLink2@vNet2 in vNet2 corresponds to an LSP tunnel PortA-PortB passing through PortA and PortB in the physical network; and vLink3@vNet2 corresponds to an LSP tunnel PortC-PortD-PortE-PortF passing through PortC, PortD, PortE andPortF in the physical network, and vNet2 does not perceive Node3 or PortD and PortE of Node3. In the physical network, the LSP label of each node changes due to switching.

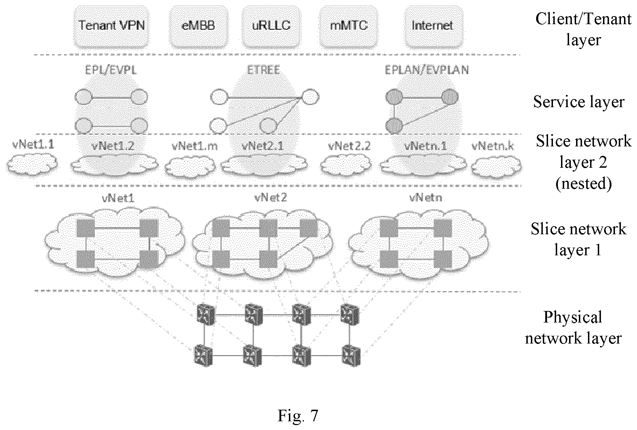

As shown in Fig. 7 which is a network architecture model based on nested network slices, a slice network vNet1 created based on Fig. 1 is further virtualized to form sub-slices vNet1.1, vNet1.2 ... vNet1.m. A slice network layer 2, which may also be referred to as a sub-slice layer, is added to the entire network architecture. Services are loaded onto the sub-slices with no need to perceive the physical network layer and the slice layer below. The slice layer and the sub-slice layer can be dynamically created according to characteristics of customer's requirements, and performs respective lifecycle control and independent management and operation, so that the entire network has good flexibility and elasticity, and isolation requirements of slices are met while resource sharing is realized.

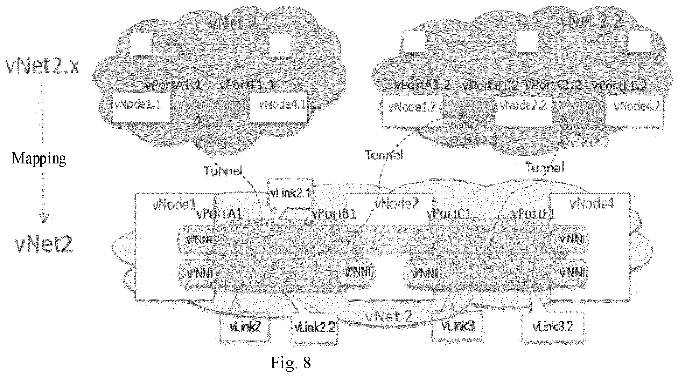

Fig. 8 illustrates a method for implementing nested network slicing based on tunnels (with vNet2 in Fig. 5 already created). In vNet2, vNode1, vNode2 and vNode4 are some network elements, vPortA1, vPortB1, vPortC1 and vPortF1 may be regarded as "physical ports" (but actually virtual ports), and the links vPortA1-vPortB1 and vPortC1-vPortF1 illustrated in Fig. 5 may be regarded as "physical links" (but actually virtual links). Based on those links, a tunnel vPortA1-vPortB1 passing through vPortA1 and vPortB1, a tunnel vPortC1-vPortF1 passing through vPortC1 and vPortF1, and a tunnel vPortA1-vPortB1-vPortC1-vPortF1 passing through vPortA1, vPortB1, vPortC1 and vPortF1 are separately created, so as to further perform virtualized network slicing.

Taking the creation of a sub-slice vNet2.1 as an example, the method includes the following steps 301 to 303.

In the step 301, virtual network elements (vNodes) are created. Virtual network elements vNode1.1 and vNode4.1 and virtual ports (vPorts (vNNIs)) vPortA1.1 and vPortF1.1 are created according to characteristic parameters of the virtual network elements and the virtual ports provided by a user. The vPorts (vNNIs) are endpoints of a virtual link vLink, and are also endpoints of a tunnel.

In the step 302, a virtual link (vLink) is created. The vLink is created according to the characteristics of the ports of the virtual link provided by the user. A tunnel is created between vNode1 and vNode4 to serve as a virtual link vLink2.1 between vNode1.1 and vNode4.1, and normal tunneling is performed at the intermediate node vNode2, and vNet2.1 does not need to perceive vNode2.

In the step 303, a virtual network is created. The creation of vNet2.1 is completed based on a set of the virtual network elements and the virtual link created in the previous steps.

A sub-slice vNet2.2 may be created through the same steps.

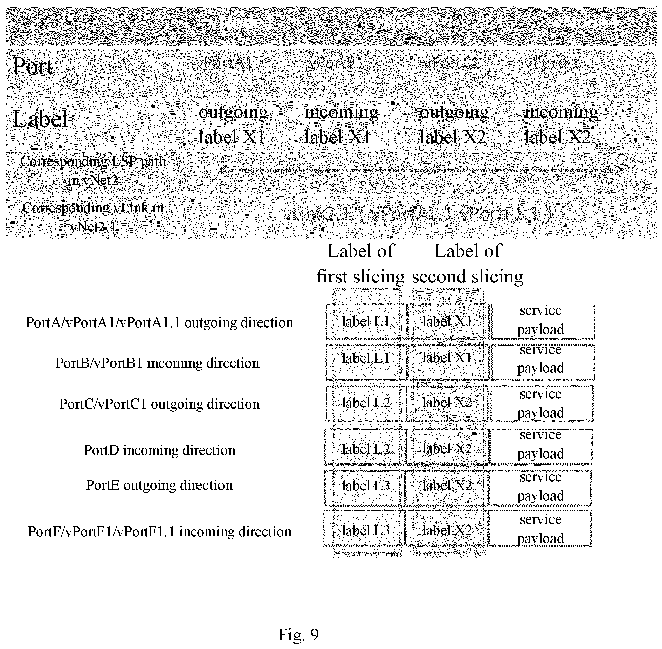

The tunnels shown in Fig. 8 may adopt an LSP tunnel mechanism which is realized by assigning an incoming label and/or an outgoing label to each node. Fig. 9 shows LSP label assignment and service encapsulation of vNet2.1 formed through nested network slicing based on double-layer LSP tunnels. vLink2.1 in vNet2.1 corresponds to an LSP tunnel vPortA1-vPortB1-vPortC1-vPortF1 passing through vPortA1, vPortB1, vPortC1 and vPortF1 in vNet2. In packet encapsulation, outer-layer labels correspond to first slicing, inner-layer labels correspond to second slicing, and the two layers of labels represent a nested slice network. The LSP label of each vNode in vNet2 changes due to switching. vNet2.1 does not perceive vNode2 or the ports of vNode2 either.

From the perspective of service forwarding, for vNet2.1, vlink2.1 in vNet2.1 corresponds to the LSP tunnel vPortA1-vPortB1-vPortC1-vPortF1 passing through vPortA1, vPortB1, vPortC1 and vPortF1 in vNet2 (as shown in Fig. 8), and such LSP tunnel is marked by LSP labels X1 and X2 (as shown in the upper part of Fig. 9), and is created based on vLink2 (vPortA1-vPortB1) and vLink3 (vPortC1-vPortF1) in vNet2. As shown in Fig. 5, the virtual link vPortA1-vPortB1 in vNet2 corresponds to the LSP tunnel PortA-PortB passing through PortA and PortB in the physical network, and the virtual link vPortC1-vPortF1 corresponds to the LSP tunnel PortC-PortD-PortE-PortF passing through PortC, PortD, PortE and PortF in the physical network; and the LSP tunnel PortA-PortB is marked with label L1 (as shown in Fig. 6), and the LSP tunnel PortC-PortD-PortE-PortF is marked with labels L2 and L3. Therefore, in service forwarding, the labels X1 and X2 representing vLink2.1 in the sub-slice are first assigned, and then the labels L1, L2 and L3 representing vLink2 and vLink3 in the slice created in the first slicing are assigned. Since vNet2 does not perceive Node3 or PortD and PortE of Node3, the inner-layer label X2 assigned in the slicing based on vNet2 is transmitted transparently at Node3, PortD and PortE. In this way, the service forwarding of the nested slices is realized through the two nested layers of LSP labels.

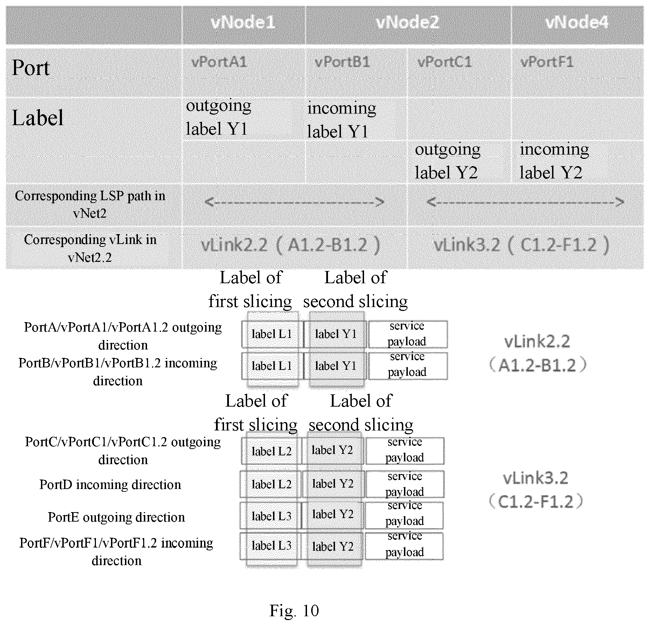

Fig. 10 shows LSP label assignment and service encapsulation of vNet2.2 formed through nested network slicing based on double-layer LSP tunnels. vLink2.2 in vNet2.2 corresponds to an LSP tunnel vPortA1-vPortB1 passing through vPortA1 and vPortB1; and vLink3.2 in vNet2.2 corresponds to an LSP tunnel vPortC1-vPortF1 passing through vPortC1 and vPortF1. In packet encapsulation, outer-layer labels correspond to first slicing, inner-layer labels correspond to second slicing, and the two layers of labels represent the nested slice network vNet2.2. Since vNet2 does not perceive Node3 or PortD and PortE of Node3, an inner-layer label Y2 assigned in the slicing based on vNet2 is transmitted transparently at Node3, PortD and PortE.

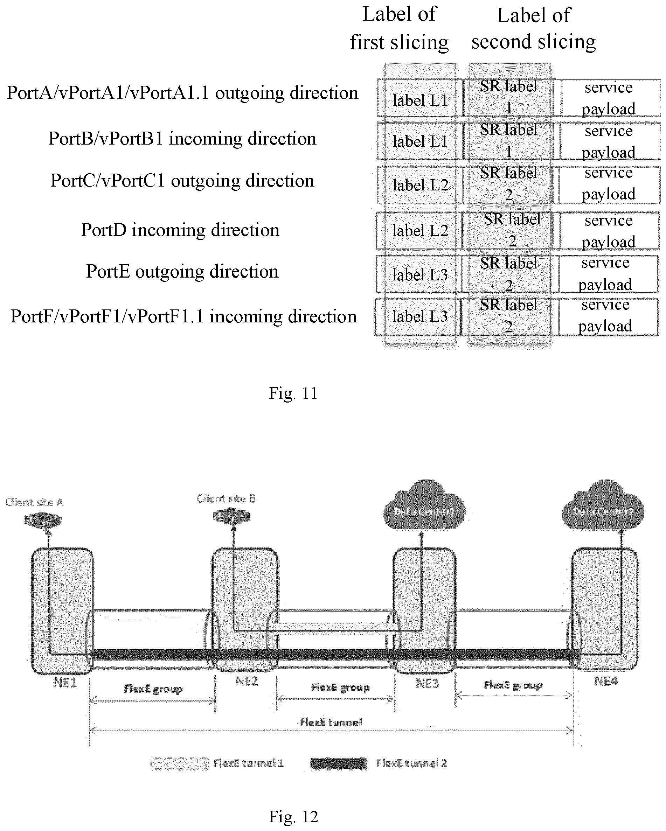

Nesting of slices can adopt nesting of soft slices, nesting of hard slices, or nesting of soft slices and hard slices. Nested slicing based on dual-layer LSP tunnels is a mode of nesting of soft slices. In addition, nested slicing based on an LSP tunnel and an SR tunnel is also a mode of nesting of soft slices. As shown in Fig. 11 which shows service frame encapsulation of the slice vNet2.1 formed through the nested slicing based on an LSP tunnel and an SR tunnel. SR provides a tunnel implementation mechanism based on source routing. A segment identifier (Segment ID) is configured to identify a node or a link to be passed on an SR tunnel. Just with a Segment List encapsulated in a packet header at a source node, a device can perform forwarding according to the path information represented by an SR label stack in the packet header. The forwarding mode of the SR is compatible with a label forwarding mode of the LSP. Since an SR label represents a node or a link and is irrelevant to a service, an intermediate node does not perceive the service. Therefore, the requirement for the processing capacity of the intermediate node is reduced, which allows a device to process a larger number of services, thereby meeting the requirements of Internet of Everything in 5G era.

In the case where nested slicing is performed based on an LSP tunnel and an SR tunnel, a physical network is first sliced into vNet1 and vNet2 based on the LSP tunnel as illustrated by Fig. 5, so as to achieve first slicing of the network. Then nested slicing is performed with reference to Fig. 8 to create SR tunnels as the vLinks between the network elements in vNet2.1 and vNet2.2, thereby slicing vNet2 into vNet2.1 and vNet2.2. Operations such as Push, Next and Continue can be performed on the SR tunnel labels to complete pop operation, push operation and transparent transmission operation of the labels. In Fig. 11, the outer-layer LSP labels L1, L2, and L3 represent the LSP tunnels corresponding to the virtual links of vNet2 formed by the first slicing, and inner-layer SR label 1 and SR label 2 represent the SR tunnels corresponding to the virtual links of vNet2.1 formed by the second slicing.

The nesting of slices can also be implemented based on a FlexE tunnel (a hard slice) and an LSP tunnel. According to a FlexE tunnel mechanism, a client-layer service is mapped to FlexE Client at a source node, and is de-mapped from FlexE Client at a destination node. As shown in Fig. 12, Client site A is mapped to a line-side FlexE tunnel in NE1, and is de-mapped from the line-side FlexE tunnel in NE4 to a client interface of Data Center2. Meanwhile, Operations, Administration, and Maintenance (OAM) is inserted as required when the FlexE Client receives the client-layer service and multiplexes the services in the FlexE tunnel, and the service is demultiplexed and sent after the OAM is extracted from the FlexE tunnel; and the client-layer service does not perceive the insertion or extraction of the OAM

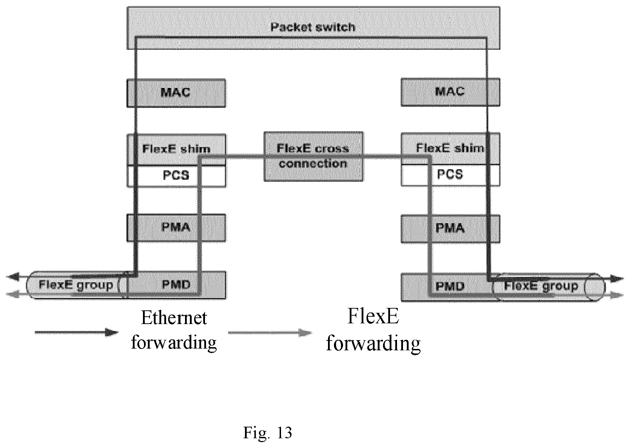

Intermediate network nodes of the FlexE tunnel perform switching based on the FlexE Client, and Fig. 13 shows a single-node service forwarding model of FlexE. Forwarding through Ethernet generally takes place on a Media Access Control (MAC) layer, and realizes L2 forwarding of a service through packet switching. However, forwarding through FlexE takes place on a shim layer of FlexE, and realizes L1 forwarding of a service through FlexE cross connection, so that the forwarding through FlexE can provide end-to-end Ethernet slice connection for source and sink nodes in the network, and is characterized in low latency, transparent transmission, and hard isolation. A FlexE tunnel may be a node-to-node single hop tunnel, such as FlexE tunnel 1 in Fig. 12, and may also be a multi-hop tunnel which crosses the intermediate network elements, such as FlexE tunnel2 in Fig. 12. The intermediate network elements NE2 and NE3 of the multi-hop FlexE tunnel2 directly perform FlexE cross on the service, and shield service processing of higher layers, which enables the carried service to be forwarded to the destination by one hop, and achieve the forwarding of the service with ultra-low latency.

In the nested slicing based on the FlexE tunnel (the hard slice) and the LSP tunnel, the first slicing is implemented through the FlexE tunnel, and a method for creating a network slice through the FlexE tunnel mechanism is shown in Fig. 5. Similar to what is described above, the creation of the slice also includes the creation of virtual network elements vNodes and virtual links vLinks. The only difference is that the tunnels corresponding to vLink2 and vLink3 are FlexE tunnels. The second nested slicing still adopts the nested slicing based on the LSP tunnel as shown in Fig. 8, and the slice is created with the same method as described above.

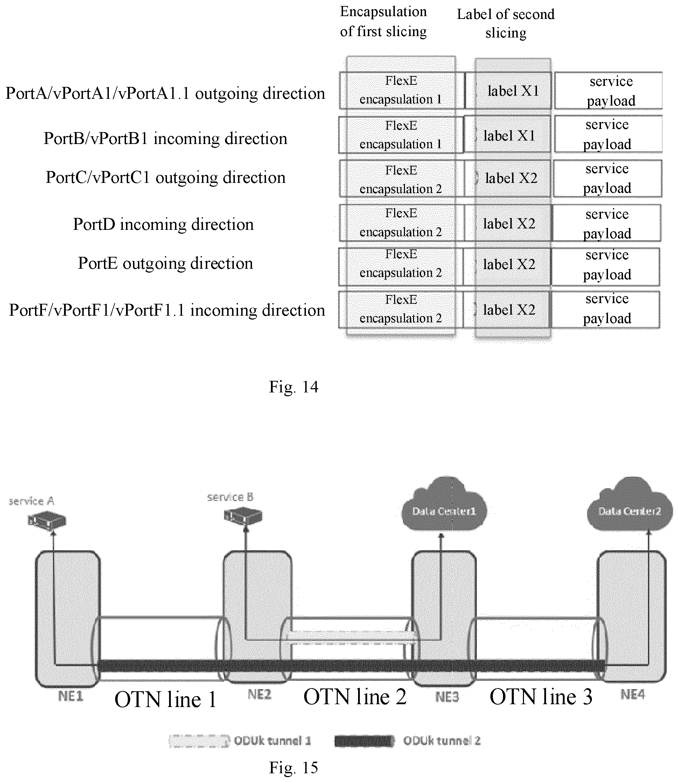

Fig. 14 shows label assignment and service encapsulation of vNet2.1 formed through nested network slicing based on the FlexE tunnel and the LSP tunnel, with two layers of encapsulation and labels configured to represent the nested slice network. The outer-layer FlexE encapsulation corresponds to the first slicing. As shown in Fig. 5, the physical tunnel corresponding to vlink2@vNet2 in vNet2 is implemented by FlexE encapsulation1, and the physical tunnel corresponding to vlink3@vNet2 in vNet2 is implemented by FlexE encapsulation2. For a specific FelxE tunnel, the FlexE encapsulation of the tunnel is kept unchanged, and the routing of the tunnel is configured by a network administrator or is calculated by a controller according to a protocol. The inner-layer labels shown in Fig. 14 correspond to the second slicing. As shown in Fig. 8, vLink2.1 in vNet2.1 corresponds to the LSP tunnel vPortA1-vPortB1-vPortC1-vPortF1 passing through vPortA1, vPortB1, vPortC1 and vPortF1 in vNet2.

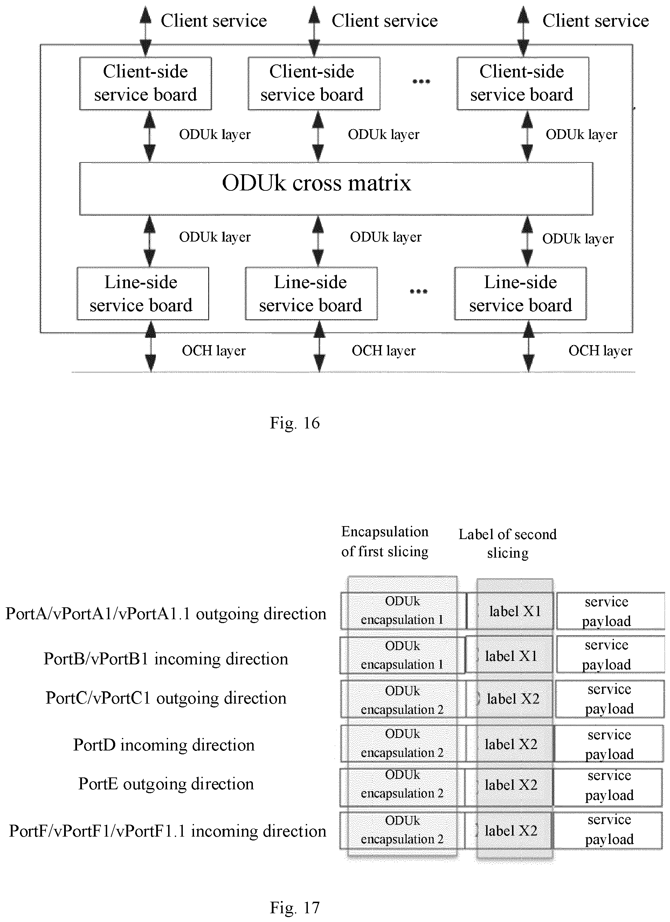

In addition, a hard slice can be created based on an ODUk tunnel, and nesting of slices can also be implemented based on an ODUk tunnel and an LSP tunnel. According to an ODUk tunnel mechanism, a client-layer service is mapped to and encapsulated in an ODUk at a source node, then is multiplexed to a line side of an Optical Transport Network (OTN), and is de-mapped from the ODUk at a destination node. As shown in Fig. 15, service A is mapped to an ODUk and multiplexed to a line side of NE1, and is de-mapped from the ODUk at the line side in NE4 to a client interface of Data Center2. Intermediate network nodes of the ODUk tunnel perform switching based on the ODUk, and Fig. 16 shows a single-node service forwarding model of ODUk. L1 forwarding of the service is realized through ODUk cross, so that end-to-end connection can be provided for source and sink nodes in the network. Therefore, the forwarding through ODUk is characterized in low latency, transparent transmission, and hard isolation. An ODUk tunnel may be a node-to-node single hop tunnel, such as ODUk tunnel 1 in Fig. 15, and may also be a multi-hop tunnel which crosses the intermediate network elements, such as ODUk tunnel2 in Fig. 15. The intermediate network elements NE2 and NE3 of the multi-hop ODUk tunnel2 directly perform ODUk cross on the service.

In the nested slicing based on the ODUk tunnel (the hard slice) and the LSP tunnel, the first slicing is implemented through the ODUk tunnel, and a method for creating a network slice through the ODUk tunnel mechanism is shown in Fig. 5. Similar to what is described above, the creation of the slice also includes the creation of virtual network elements vNodes and virtual links vLinks. The only difference is that the tunnels corresponding to vLink2 and vLink3 are ODUk tunnels. The second nested slicing still adopts the nested slicing based on the LSP tunnel as shown in Fig. 8, and the slice is created with the same method as described above.

Fig. 17 shows label assignment and service encapsulation of vNet2.1 formed through nested network slicing based on the ODUk tunnel and the LSP tunnel, with two layers of encapsulation and labels configured to represent the nested slice network. The outer-layer ODUk encapsulation corresponds to the first slicing. As shown in Fig. 5, the physical tunnel corresponding to vlink2@vNet2 in vNet2 is implemented by ODUk Encapsulation1, and the physical tunnel corresponding to vlink3@vNet2 in vNet2 is implemented by ODUk Encapsulation2. For a specific ODUk tunnel, the encapsulation of the tunnel is kept unchanged, and the routing of the tunnel is configured by a network administrator is calculated by a controller according to a protocol. The inner-layer labels shown in Fig. 17 correspond to the second slicing. As shown in Fig. 8, vLink2.1 in vNet2.1 corresponds to the LSP tunnel vPortA1-vPortB1-vPortC1-vPortF1 passing through vPortA1, vPortB1, vPortC1 and vPortF1 in vNet2.

With a comparison between the nesting mode of a hard slice (a FlexE tunnel or an ODUk tunnel) and an LSP tunnel and the nesting mode of dual-layer LSP tunnels, adopting slicing based on the hard slice for the first slicing facilitates the partitioning and management of hardware resources of a device, and can meet latency and isolation requirements of a service more easily. Adopting slicing based on the LSP tunnel for the first slicing has the advantages of low hardware requirements for the device, better service multiplexing effects, and more flexible deployment. Thus, proper solutions to nested slicing can be selected according to different needs of clients, and it is suggested to adopt the slicing based on the hard slice for the first slicing from the perspective of resource management and slicing effects. In addition, though the number of slice layers is not limited from the perspective of architecture of nested slices, an appropriate number of slice layers should be selected according to factors such as the needs of the clients and device capacity, because more resources and capabilities are required for a device with the increase of the number of slice layers, and the difficulty of management, operation and maintenance of the slices is also increased, which may cause inconvenience to the clients. In general, it is suggested to adopt nested slicing based on double-layer tunnels.

For the above nested network slices implemented through the nested tunnels, a slice in any layer is endowed with the characteristics similar to a physical network and can be loaded with various services such as L2VPN services and L3VPN services. For example, if a L2VPN service is to be loaded directly on vNet2 in Fig. 5, an LSP tunnel for the L2VPN service needs to be created in vNet2, and label nesting in the same form as the label and service encapsulation shown in Fig. 9 is also needed, while the only difference is that the inner-layer label represents the tunnel of the service.

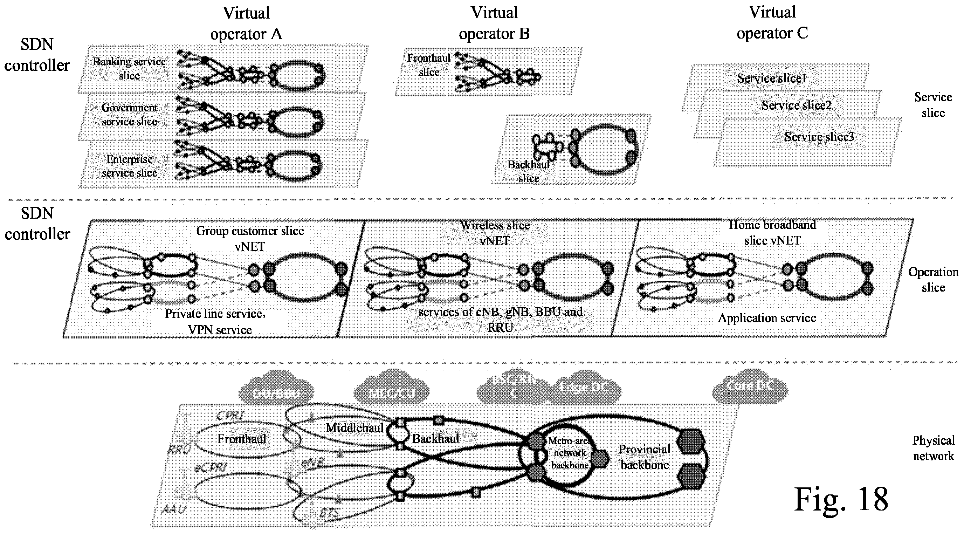

Fig. 18 illustrates one of the application scenarios of nested slicing of a bearer network, with a single physical network virtualized as required to generate a group customer slice, a wireless slice and a home broadband slice. Those slices are independently managed, operated and maintained by corresponding virtual operators, and can be further sliced according to customer needs. For example, a virtual operator A may further slice the group customer slice network into a banking service sub-slice, a government service sub-slice and an enterprise service sub-slice according to the service requirements of the virtual operator A. Each sub-slice can be dynamically created and independently operated and maintained. Thus, resource sharing of the bearer network and independent operation and maintenance of the slices are realized through slices and sub-slices on the same physical network.

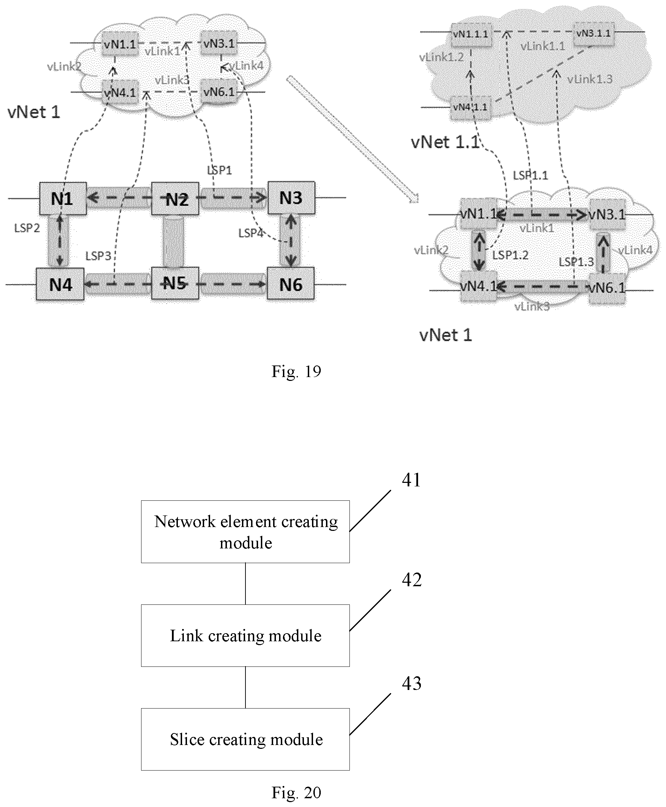

As shown in Fig. 19, an implementation of the present disclosure of creation of nested network slices in a bearer network through a tunnel mechanism such as an LSP tunnel mechanism is described below with reference to an application example.

In a first part, a network slice vNet1 is created based on a physical network, which includes physical network elements N1, N2, N3, N4, N5 and N6. The method of creating vNet1 includes the steps below.
In step (1), an administrator initiates the creation of vNet1 which needs to include four virtual nodes vN1.1, vN3.1, vN4.1 and vN6.1.
In step (2), vN1.1, which includes a corresponding virtual user-network interface vUNI and a virtual network-to-network interface vNNI, is created, and vNNI serve as an endpoint of a Multiprotocol Label Switching-Transport Profile (MPLS-TP) LSP1.
In step (3), vN3.1, vN4.1 and vN6.1 are created in the same way as vN1.1.
In step (4), a virtual link vLink1 is created between vN1.1 and vN3.1. Based on a topological relationship of the physical network, a controller calculates the routing of vLink1 which is N1-N2-N3, and calculates the label switching of an MPLS-TP LSP inside N2.
In step (5), the controller creates an MPLS-TP LSP tunnel N1-N2-N3 serving as the vLink between vN1.1 and vN3.1, thereby completing the creation of the virtual link.
In step (6), the steps (4) and (5) are repeated to create a vLink vN1.1-vN4.1 between vN1.1 and vN4.1, a vLink vN3.1-vN6.1 between vN3.1 and vN6.1, and a vLink vN4.1-vN6.1 between vN4.1 and vN6.1.
In step (7), the controller establishes an inclusive relationship between vNet1 and the corresponding virtual nodes and virtual links, thereby completing the instance of vNet1.

Other tunnel technologies, such as an ODUk tunnel, an SR tunnel and a FlexE tunnel, may also be adopted to create vNet1 based on the physical network. The method of creating vNet1 using the other tunnel technologies includes the steps the same as the above creation method, but what the controller (or the network administrator) calculates in the step (4) is the routing of an ODUk tunnel, an SR tunnel or a FlexE tunnel, and what the controller creates (or the network administrator configures) in the step (5) is the ODUk tunnel, the SR tunnel or the FlexE tunnel.

In a second part, a nested network slice vNet1. 1 is created based on vNet1 including vN1.1, vN3.1, vN4.1 and vN6.1. The method of creating vNet1.1 includes the steps below.
In step (a), the administrator initiates the creation of vNet1.1 which needs to include three virtual nodes vN1.1.1, vN3.1.1 and vN4.1.1.
In step (a), vN1.1.1, which includes a corresponding virtual user-network interface vUNI and a virtual network-to-network interface vNNI, is created, and vNNI serve as an endpoint of an MPLS-TP LSP1.1.
In step (c), vN3.1.1 and vN4.1.1 are created in the same way as vN1.1.1.
In step (d), a virtual link vLink1.3 is created between vN1.1.1 and vN4.1.1. Based on the network topological relationship, the controller calculates the routing of vLink1.3 which is vN4.1-vN6.1-vN3.1, and calculates the label switching of an MPLS-TP LSP inside vN6.1.
In step (e), the controller creates an MPLS-TP LSP tunnel 1.3 vN4.1-vN6.1-vN3.1 serving as the vLink between vN4.1.1 and vN3.1.1, thereby completing the creation of the virtual link.
In step (f), the steps (d) and (e) are repeated to create a vLink vN1.1.1-vN4.1.1 between vN1.1.1 and vN4.1.1, and a vLink vN1.1.1-vN3.1.1 between vN1.1.1 and vN3.1.1.
In step (g), the controller establishes an inclusive relationship between vNet1.1 and the corresponding virtual nodes and virtual links, thereby completing the instance of vNet1. 1.

The other tunnel technologies such as an SR tunnel may also be adopted to create vNet1.1 based on vNet1. The method of creating vNet1.1 using the other tunnel technologies includes the steps the same as the above creation method, but what the controller calculates in the step (d) is a source routing label of an SR tunnel, and what the controller creates (or the network administrator configures) in the step (e) is the SR tunnel.

As shown in Fig. 20, an implementation of the present disclosure further provides a device for implementing network slicing, including a network element creating module 41 configured to create a plurality of virtual network elements; a link creating module 42 configured to create a virtual link between the virtual network elements by means of tunnels; and a slice creating module 43 configured to establish an inclusive relationship between a network slice and the virtual network elements and the virtual link.

According to the embodiments of the present disclosure, network slicing is implemented based on the tunneling technology, which can endow the network slice architecture with a topology abstraction capability, has no high requirements for physical port resources, and can be widely applied to bearer networks based on the technologies such as a PTN and a router, and future 5G bearer networks.

In an embodiment, the network element creating module 41 is configured to create the virtual network elements and virtual ports thereof according to characteristic parameters of the virtual network elements and the virtual ports.

In an embodiment, the virtual ports of the virtual network elements include a virtual user-network interface and a virtual network-to-network interface.

In an embodiment, the link creating module 42 is configured to create a tunnel as the virtual link according to port parameters of the virtual link.

In an embodiment, the link creating module 42 is configured to calculate the routing of the virtual link according to the port parameters of the virtual link and a network topological relationship, and create a tunnel as the virtual link.

In an embodiment, the slice creating module 43 is configured to complete the creation of the network slice based on a set of the created virtual network elements and virtual link.

According to the embodiments of the present disclosure, a slice network is created by creating vLinks between the virtual network elements by means of tunnels (such as an LSP tunnel) on a forwarding plane, and nesting of slices is implemented through recursion of virtualization of tunnels and nodes. The virtual transport network created by slicing is similar to the physical network, and can bear various services such as L2VPN services and L3VPN services.

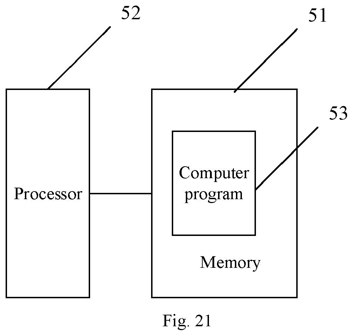

As shown in Fig. 21, an implementation of the present disclosure further provides a controller, including a memory 51, a processor 52, and a computer program 53 which is stored on the memory 51 and can run on the processor 52. When the processor 52 executes the program, the method for implementing network slicing is performed.

The controller may be an SDN controller.

An embodiment of the present disclosure further provides a computer-readable storage medium having computer-executable instructions stored thereon. The computer-executable instructions are configured to perform the method for implementing network slicing when being executed by a processor.

In the embodiment, the above storage medium may include, but is not limited to, various media capable of storing program codes, such as a Universal Serial Bus Flash Disk (USB flash disk), a Read-Only Memory (ROM), a Random Access Memories (RAM), a mobile hard disk, a magnetic disk and an optical disc.

It should be understood that, all or some of the steps in the method disclosed above, the functional modules/units in the systems and the devices may be implemented as software, firmware, hardware, or suitable combinations thereof. If implemented as hardware, the division between the functional modules/units stated above is not necessarily corresponding to the division of physical components; for example, one physical component may have a plurality of functions, or one function or step may be performed through cooperation of several physical components. Some or all of the components may be implemented as software executed by a processor, such as a digital signal processor or a microprocessor, or may be implemented as hardware, or may be implemented as an integrated circuit, such as an application specific integrated circuit. Such software may be distributed on computer-readable medium, which may include computer storage medium (or non-transitory medium) and communication medium (or transitory medium). The term "computer storage medium" includes volatile/nonvolatile and removable/non-removable medium used in any method or technology for storing information (such as computer-readable instructions, data structures, program modules and other data). The computer storage medium include, but are not limited to, RAMs, ROMs, Electrically Erasable Programmable Read-Only Memories (EEPROMs), flash memories or other memory techniques, Compact Disc Read-Only Memories (CD-ROMs), Digital Video Disks (DVDs) or other optical discs, magnetic cassettes, magnetic tapes, magnetic disks or other magnetic storage devices, or any other medium which can be used to store the desired information and can be accessed by a computer. In addition, the communication medium generally include computer-readable instructions, data structures, program modules or other data in a modulated data signal, such as a carrier wave or other transmission mechanism, and may include any information delivery medium.

## Claims

1. A method for implementing network slicing, comprising creating one network slice layer or a plurality of nested network slice layers between a physical network layer and a service layer, wherein each network slice in the one network slice layer or in each of the plurality of network slice layers is created through the following steps:
creating virtual network elements;
creating a virtual link between the virtual network elements by means of tunnels; and
establishing an inclusive relationship between the network slice and the virtual network elements and the virtual link.

2. The method of claim 1, wherein the step of creating the virtual network elements comprises:
creating the virtual network elements and virtual ports thereof according to characteristic parameters of the virtual network elements and the virtual ports.

3. The method of claim 2, wherein the virtual ports of the virtual network elements comprise a virtual user-network interface and a virtual network-to-network interface.

4. The method of claim 1, wherein the step of creating the virtual link between the virtual network elements by means of tunnels comprises:
creating a tunnel as the virtual link according to port parameters of the virtual link.

5. The method of claim 4, wherein the step of creating the tunnel as the virtual link according to the port parameters of the virtual link comprises:
calculating routing of the virtual link according to the port parameters of the virtual link and a network topological relationship, and creating the tunnel as the virtual link.

6. The method of any one of claims 1 to 5, wherein the tunnel comprises at least one of:
a Label Switched Path, LSP, tunnel, a Flex Ethernet, FlexE, tunnel, a Segment Routing, SR, tunnel and an Optical Channel Data Unit, ODUk, tunnel.

7. The method of claim 1, wherein in a case where the plurality of nested network slice layers are created between the physical network layer and the service layer, the plurality of network slice layers are created sequentially from bottom to top.

8. The method of claim 6, wherein in a case where two nested network slice layers are created between the physical network layer and the service layer, a first network slice layer of the two nested network slice layers is implemented based on at least one of the LSP tunnel, the FlexE tunnel and the ODUk tunnel, and a second network slice layer of the two nested network slice layers is implemented based on the LSP tunnel or the SR tunnel.

9. A device for implementing network slicing, comprising:
a network element creating module configured to create virtual network elements;
a link creating module configured to create a virtual link between the virtual network elements by means of tunnels; and
a slice creating module configured to establish an inclusive relationship between a network slice and the virtual network elements and the virtual link.

10. A controller, comprising a memory, a processor, and a computer program which is stored on the memory and is capable of running on the processor, wherein when the processor executes the program, the method for implementing network slicing of any one of claims 1 to 8 is performed.

11. A computer-readable storage medium having computer-executable instructions stored thereon, wherein the computer-executable instructions are configured to perform the method for implementing network slicing of any one of claims 1 to 8 when being executed by a processor.
